# EUROPEAN PATENT APPLICATION

(11) **EP 2 911 047 A1**
(43) Date of publication of application: **26.08.2015**
(21) Application number: 15155330.2
(22) Date of filing: 17.02.2015
(51) Int. Cl.: G06F 3/0481, G06F 3/0485, G06F 3/0488

(54) **Method and apparatus for displaying information and electronic device adapted to the method**

(30) Priority: 17.02.2014 KR 20140017892
(71) Applicant: Samsung Electronics Co., Ltd, Gyeonggi-do 443-742 (KR)
(72) Inventor: Bae, Hyerim, 443-742 Gyeonggi-do (KR); Lee, Changho, 443-742 Gyeonggi-do (KR); Kang, Doosuk, 443-742 Gyeonggi-do (KR)
(74) Representative: Nederlandsch Octrooibureau

(57) **Abstract**

A method and an apparatus for displaying information and an electronic device adapted to the method are provided. The method includes displaying first information including at least part of content on a display functionally connected to the electronic device, switching the first information to second information including at least part of the contents in response to an input related to the contents, and displaying the first information and the second information on the display, and displaying third information related to at least one of the at least part of the content, or at least part of preset content on the display, based on the display of the contents.

## Description

### TECHNICAL FIELD

The present disclosure relates to a method and apparatus for displaying information and an electronic device adapted to the method.

### BACKGROUND

Recent electronic devices, such as smart phones tablet PCs, etc., have developed to execute one or more application programs (or applications) and display the corresponding information on the display.

Electronic devices have developed to functionally connect to displays. While an electronic device is displaying part of information related to applications on the display, the electronic device may receive an input for switching the information to the other information and perform the information switching operation. However, it is hard for the user to recognize the information that is changed in the switching operation.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus that displays information and provides the additional information while the information switching operation is performed.

In accordance with an aspect of the present disclosure, a method for displaying information in an electronic device is provided. The method includes displaying first information including at least part of content on a display functionally connected to the electronic device, switching the first information to second information including the at least part of the content in response to an input related to the content, and displaying the first information and the second information on the display, and displaying third information related to at least one of the at least part of the content, or at least part of preset content on the display, based on the display of the content.

In accordance with another aspect of the present disclosure, an electronic device is provided. The electronic device includes a display configured to display at least part of content, and a processor configured to control the display to display first information including the at least part of the content on the display, to switch the first information to second information including the at least part of the content in response to an input related to the content, and to display the first information and the second information on the display, and to display third information related to at least one of the at least part of the content, or at least part of preset content on the display, based on the display of the content.

As described above, the method and apparatus and the electronic device according to embodiments of the present disclosure can switch and display content or information such as advertisements and photographs that the user is seeing by using applications to other content or information, according to a user's input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to an embodiment of the present disclosure;
FIG. 2 is a diagram of an information display control module of an electronic device according to an embodiment of the present disclosure;
FIG. 3 is a flow chart that describes a method for displaying information according to an embodiment of the present disclosure;
FIG. 4 is a first example of screens displaying information according to an embodiment of the present disclosure;
FIG. 5 is a second example of screens displaying information according to an embodiment of the present disclosure;
FIG. 6 is a third example of screens displaying information according to an embodiment of the present disclosure;
FIG. 7 is a fourth example of screens displaying information according to an embodiment of the present disclosure;
FIG. 8 is a fifth example of screens displaying information according to an embodiment of the present disclosure;
FIG. 9 is a sixth example of screens displaying information according to an embodiment of the present disclosure;
FIG. 10 shows screens releasing the display of information according to an embodiment of the present disclosure; and
FIG. 11 is a flow chart that describes a method for displaying information according to another embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the expression "include" or "may include" refers to the existence of a corresponding function, operation, or element, and does not exclude one or more additional functions, operations, or elements. Also, as used herein, the terms "include" and/or "have" should be construed to denote a certain feature, number, step, operation, element, component or a combination thereof, and should not be construed to exclude the existence or possible addition of one or more other features, numbers, steps, operations, elements, components, or combinations thereof.

The expression "or" includes any or all combinations of words enumerated together. For example, the expression "A or B" may include A, may include B, or may include both A and B.

The expressions "a first', "a second", "the first", "the second", and the like may modify various elements, but the corresponding elements are not limited by these expressions. For example, the above expressions do not limit the sequence and/or importance of the corresponding elements. The above expressions may be used merely for the purpose of distinguishing one element from the other elements. For example, a first user device and a second user device indicate different user devices although both of them are user devices. For example, a first element may be termed a second element, and similarly, a second element may be termed a first element without departing from the scope of the present disclosure.

When an element is referred to as being "coupled" or "connected" to any other element, it should be understood that not only the element may be directly coupled or connected to the other element, but also a third element may be interposed therebetween. However, when an element is referred to as being "directly coupled" or "directly connected" to any other element, it should be understood that no element is interposed therebetween.

The terms used herein are used only to describe particular embodiments, and are not intended to limit the present disclosure. As used herein, the singular forms are intended to include the plural forms as well, unless the context clearly indicates otherwise.

Unless defined otherwise, all terms used herein, including technical and scientific terms, have the same meaning as those commonly understood by a person of ordinary skill in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure.

In various embodiments of the present disclosure, a "communication item" may be understood as communication content created based on one or more members. For example, the communication item may include at least one of a chatting room, address book, note, communication and email. A "communication item list" may be understood as a list in which communication items are arranged. For example, the communication item list may include at least one of a chatting room list, address book list, message list, note list, call list, and email list.

In various embodiments of the present disclosure, a "movement object" may be understood as one or more communication items which can be selected or moved from the communication list including communication items or movable information visually separated. The movement object may be displayed with at least one of a shape, size, color and effect different from those of the communication items, so as to be distinguished from the communication items.

An electronic device according to an embodiment of the present disclosure may be a device including a communication function. For example, the electronic device may include at least one of a smart phone, a tablet Personal Computer (PC), a mobile phone, a video phone, an e-book reader, a desktop PC, a laptop PC, a netbook computer, a PDA, a Portable Multimedia Player (PMP), an MP3 player, a mobile medical device, a camera, a wearable device (for example, a Head-Mounted-Device (HMD) such as electronic glasses, electronic clothes, an electronic bracelet, an electronic necklace, an electronic accessory, an electronic tattoo, and a smart watch.

According to an embodiment of the present disclosure, the electronic device may be a smart home appliance with a communication function. The smart home appliances may include at least one of, for example, televisions, digital video disk (DVD) players, audio players, refrigerators, air conditioners, cleaners, ovens, microwaves, washing machines, air purifiers, set-top boxes, TV boxes (e.g., HomeSync^{™} of Samsung, Apple TV^{™}, or Google TV^{™}), game consoles, electronic dictionaries, electronic keys, camcorders, or electronic frames.

According to an embodiment of the present disclosure, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to an embodiment of the present disclosure, the electronic device may include at least one of a part of furniture or a building/structure having a communication function, an electronic board, an electronic signature receiving device, a projector, and various kinds of measuring instruments (e.g., a water meter, an electric meter, a gas meter, a radio wave meter, and the like). The electronic device according to the present disclosure may be a combination of one or more of the aforementioned various devices. However, an electronic device according to an embodiment of the present disclosure is not limited to the aforementioned devices.

An electronic device according to various embodiments of the present disclosure is described below with reference to the accompanying drawings. The term "user" may refer to a person who uses an electronic device or a device (for example, an artificial intelligence electronic device) that uses an electronic device. FIG

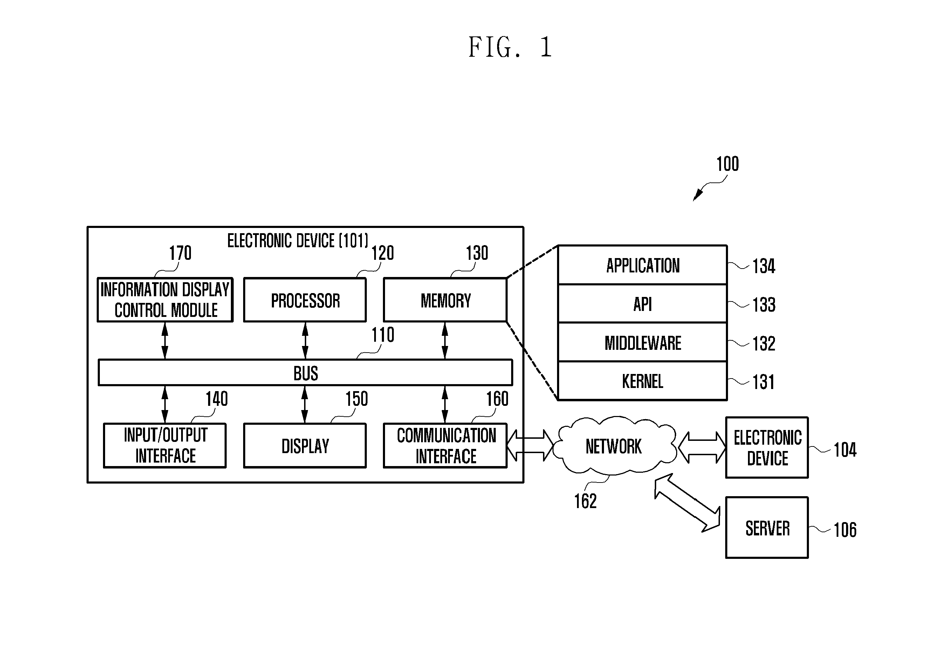

FIG. 1 is a diagram illustrating the network architecture including the electronic device according to an embodiment of the present disclosure.

Referring to FIG. 1, the network architecture includes an electronic device 101, an electronic device 104, a server 106, and a network 162. The electronic device 101 includes a bus 110, a processor 120, a memory 130, an input/output interface 140, a display 150, a communication interface 160, and an information display control module 170.

The bus 110 may be a circuitry which connects the aforementioned components to each other to communicate signals (e.g. control messages) there between.

The processor 120 receives a command from any of the aforementioned components (e.g. memory 130, input/output interface 140, display 150, communication interface 160, and information display control module 170) through the bus 110, interprets the command, and executes operation or data processing according to the decrypted command.

The memory 130 may store the command or data received from the processor 120 or other components (e.g. input/output interface 140, display 150, communication interface 160, information display control module 170, etc.) or generated by the processor 120 or other components. The memory 130 may store program modules including kernel 131, middleware 132, Application Programming Interface (API) 133, applications 134, and the like. Each programing module may be implemented as software, firmware, hardware, and any combination thereof.

The kernel 131 may control or manage the system resources (e.g., bus 110, processor 120, and memory 130) for use in executing the operation or function implemented with the middleware 132, the API 133, or the application 134. The kernel 131 also may provide an interface allowing the middleware 132, API 133, or application 134 to access the components of the electronic device 101 to control or manage.

The middleware 132 may work as a relay of data communicated between the API 133 or application 134 and the kernel 131. The middle 132 may execute control of the task requests from the applications 134 in such a way of assigning priority for use of the system resource (e.g., bus 110, processor 120, and memory 130) of the electronic device to at least one of the applications 134.

The API 133 is the interface for the applications 134 to control the function provided by the kernel 131 or the middleware 132 and may include at least one interface or function (e.g., command) for file control, window control, image control, or text control.

The applications 134 may include Short Messaging Service/Multimedia Messaging Service (SMS/MMS) applications, email applications, calendar applications, alarm applications, health care applications (e.g., application of measuring quantity of motion or blood sugar level), and environmental information applications (e.g., atmospheric pressure, humidity, and temperature applications). Additionally or alternatively, the application 134 may be an application related to information exchange between the electronic device 101 and other external electronic device (e.g., electronic device 104). Examples of the information exchange application may include a notification relay application for relaying specific information to the external electronic device 104 and a device management application for managing the external electronic device.

For example, the notification relay application may be provided with a function of relaying the alarm information generated by the other applications (e.g., SMS/MMS applications, email applications, health care applications, and environmental information applications) of the electronic device to an external electronic device (e.g., the electronic device 104). Additionally or alternatively, the notification relay application may provide the user with the notification information received from an external electronic device (e.g., the electronic device 104). The electronic device application may manage (e.g., install, delete, and update) the function of an external electronic device (e.g., turn-on/off of the electronic device 104 itself (or a part of the electronic device 104) or adjustment of the brightness or resolution of the display) which communicates with the electronic device 101 or the service (e.g., communication or messaging service) provided by the external electronic device or an application running on the external device.

The applications 134 may include an application designated according to the property (e.g. type) of an external electronic device (electronic device 104). If the external electronic device is the MP3 player, the applications 134 may include a music playback application. Similarly, if the external electronic device is a mobile medical appliance, the applications 134 may include a heal care application. The application 134 may include at least one application designated to the electronic device 101 or the applications received from the external electronic device (e.g., server 106 and electronic device 104).

The input/output interface 140 delivers the command or data input by the user through with an input/output device (e.g. sensor, keyboard, and touchscreen) to the processor 120, memory 130, communication interface 160, and/or information display control module 170 through the bus 110. For example, the input/output interface 140 may provide the processor 120 with the data corresponding to the touch may by the user on the touchscreen. The input/output interface 140 may output the command or data (which is received from the processor 120, memory 130, communication interfaced 160, or the information display control module 170 through the bus 110) through the input/output device (e.g. speaker and display). For example, the input/out interface 140 may output the voice data processed by the processor 120 to the user through the speaker.

The display 150 may present various information (e.g., multimedia data and text data) to the user.

The communication interface 160 may establish a communication connection of the electronic device 101 with an external device (e.g., the electronic device 104 and the server 106). For example, the communication interface 160 connects to the network 162 through a wireless or wired link for communication with the external device. Examples of the wireless communication technology may include Wi-Fi, Bluetooth (BT), Near Field Communication (NFC), GPS, and cellular communication technology (e.g. Long Term Evolution (LTE), LTE-Advanced (LTE-A), Code Division Multiple Access (CDMA), Wideband CDMA (WCDMA), Universal Mobile Telecommunication System (UMTS), Wireless-Broadband (WiBro), and General System for Mobile communications (GSM)). Examples of the wired communication technology may include Universal Serial Bus (USB), High Definition Multimedia Interface (HDMI), Recommended Standard 232 (RS-232), and Plain Old Telephone Service (POTS).

The network 162 may be a telecommunication network. The communication network may include at least one of a computer network, the Internet, the Internet of Things, and a telephone network. The communication protocol between the electronic device 101 and an external device (e.g. transport layer protocol, data link layer protocol, and physical layer protocol) may be supported by at least one of the applications 134, API 133, middleware 132, kernel 131, and communication interface 160.

The information display control module 170 may process at least some information acquired from other components (e.g., the processor 120, the memory 130, the input/output interface 140, or the communication interface 160), and may provide the processed information to a user through various methods. For example, the information display control module 170 may control at least some of the functions of the electronic device 101 by using the processor 120 or independently from the processor 120 such that the electronic device 101 interworks with another electronic device (for example, the electronic device 104 or the server 106).

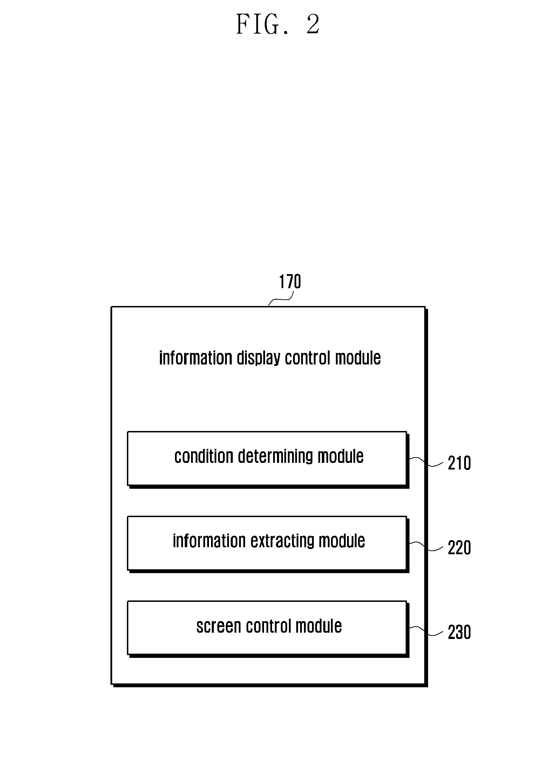

FIG. 2 is a diagram of an information display control module of an electronic device according to an embodiment of the present disclosure.

Referring to FIG. 2, the information display control module 170 may include a condition determining module 210, an information extracting module 220, and a screen control module 230.

The condition determining module 210 may determine whether a user's input is, for example, a request for changing information displayed on the screen. The condition determining module 210 may detect a user's input for moving screens (e.g., up, down, left and right) on the display, which are input from various input systems. The condition determining module 210 receives a user's input for moving screen and determines the movement speed or direction of a screen. For example, a user may scroll a screen by a touch gesture (e.g., flicking or dragging gesture) or a scroll wheel. The condition determining module 210 compares an input speed of a touch gesture with a threshold. When the condition determining module 210 ascertains that the input speed of a touch gesture exceeds a threshold, the condition determining module 210 may determine that the touch gesture is a flicking gesture. When the condition determining module 210 ascertains that the input speed of a touch gesture is less than or equal to the threshold, the condition determining module may determine that the touch gesture is a dragging flick. The condition determining module 210 receives a user's input and detects a distance of moving a screen (a movement distance of a screen). The condition determining module 210 transfers the movement distance of a screen to the screen control module 230. The screen control module 230 performs switching, altering, and outputting for information displayed on the display according to the movement distance of a screen.

The condition determining module 210 may determine whether a user's input for moving a screen satisfies a condition for displaying additional information. The additional information displaying condition may be one of: a case where a function for displaying additional information is set, a case where a movement distance and a movement speed of a screen exceed a threshold, and a case where a user's preset input is detected. For example, when the condition determining module 210 ascertains that a movement speed of a screen by a user exceeds a threshold, it may perform a control operation to display additional information on the display.

The information extracting module 220 may select additional information to be displayed on a screen, according to a user's settings or a preset rule. The information extracting module 220 may select additional information, based on at least one of information displayed on a screen (e.g., content), information provided from an external server (e.g., server 106 shown in FIG. 1), information related to an additional electronic device (e.g., accessory device), and information stored in the electronic device 101. For example, additional information may refer to content corresponding to objects that can be visually discerned, e.g., thumbnails, images, headlines, titles, advertisements, videos, etc.

The information extracting module 220 may also select additional information according to a user's control or an electronic device manufacturer's settings. For example, in order to move a screen for a webpage, the information extracting module 220 may select a title of the items in the webpage as an additional item (additional information). In order to move a screen for pages of an e-book, the information extracting module 220 may select a sub-title of the e-book as an additional item (additional information).

According to an embodiment of the present disclosure, the electronic device 101 may be set to select additional information from: information displayed on the screen, types of executed functions (e.g., applications), or information obtained from other electronic devices.

The screen control module 230 receives a user's input for moving a screen, moves the screen, and displays information thereon. The screen control module 230 moves a screen based on a user's input movement distance and outputs information altered according to the movement.

The screen control module 230 calls additional information selected when a screen is moved and display it on the screen. The screen control module 230 may determine one or more of color, shape, size, layout, and display effect of additional information. The screen control module 230 may determine a location of additional information to be displayed on the screen and alter the screen layout according to the determined location. For example, when additional information is located at the center of the screen, the screen control module 230 may alter the screen layout in such a way that the additional information is combined with/overlaid on the information displayed on the screen.

The screen control module 230 may determine a location of additional information to be displayed on the screen, considering a location of information displayed on the screen. The screen control module 230 may perform a control operation to display additional information on an area according to a user's settings or a manufacturer's settings, e.g., the center of the screen, an area between pages, an area where no content is displayed, and the like.

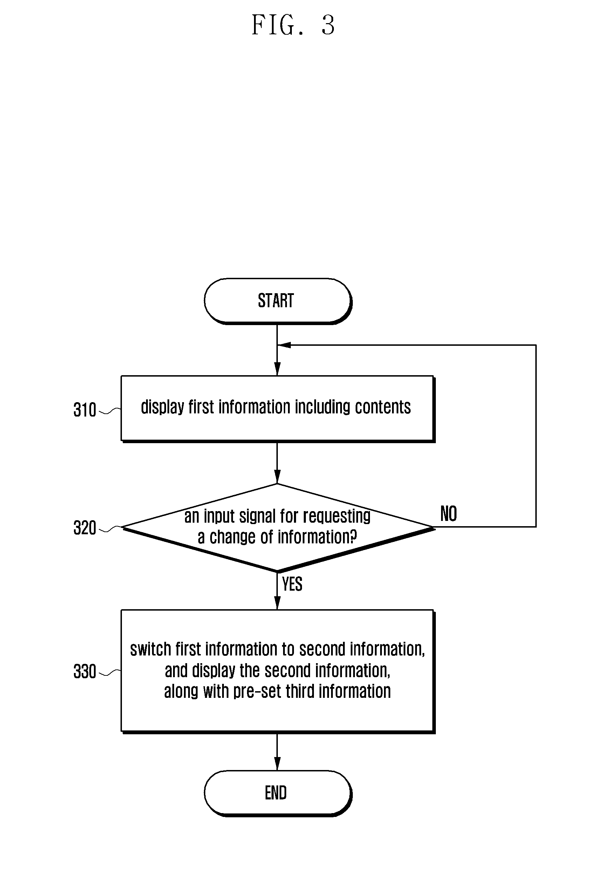

FIG. 3 is a flow chart that describes a method for displaying information according to an embodiment of the present disclosure.

Referring to FIG. 3, the electronic device may display first information including part of content in operation 310. The first information may be: part of a number of content; or part of information including one or more content. Examples of the first information are web pages, function execution information (e.g., an album executing screen, a list display screen, etc.) including one or more content, and the like.

The electronic device may receive an input signal for requesting a change of information in operation 320. An example of the input signal is a signal (e.g., a flicking operation) for moving a screen in one or more directions. Another example of the input signal is signals corresponding to a first motion moving in a first direction and a second motion moving in a second direction perpendicular to the first direction.

The electronic device moves the screen in one or more directions, switches the first information displayed on the screen to second information, and displays it, in response to the input signal for requesting a change of information in operation 330. The electronic device may also display third information when moving the screen. The third information may be one of part of information displayed on a screen, information stored in the electronic device, and information obtained from an external server (e.g., sever, accessory device) related to the electronic device.

The electronic device according to embodiments of the present disclosure supports various types of user interactions, which are described below.

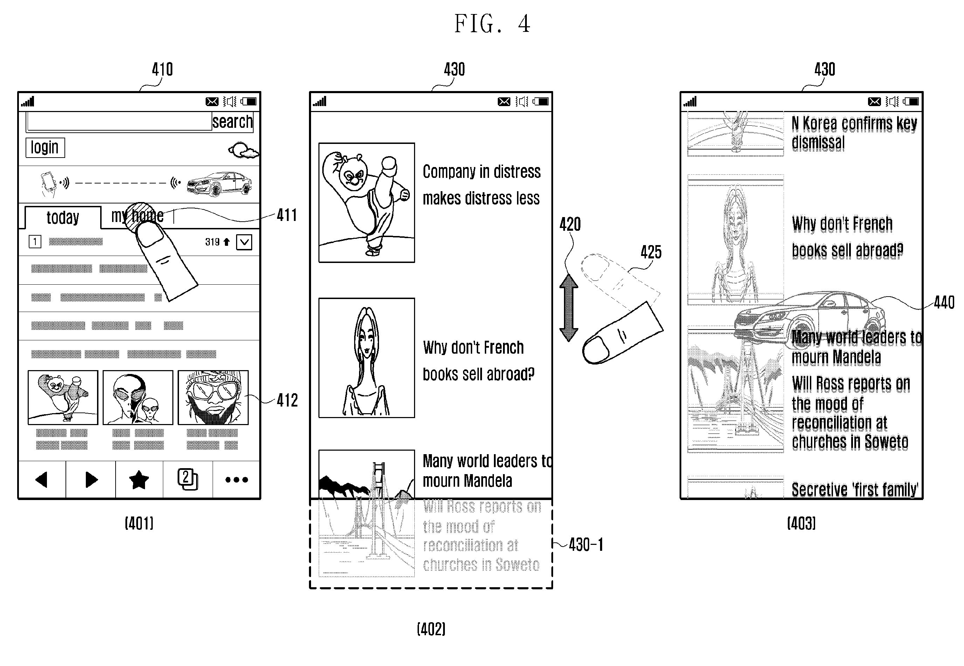

FIG. 4 is a first example of screens displaying information according to an embodiment of the present disclosure.

Referring to FIG. 4, the electronic device may be operated in information displaying mode for displaying part of content according to a user's request or a preset schedule (e.g., a notification event, a reception event, etc.). Examples of the information displaying mode are a mode for displaying structured electronic documents (e.g., e-books, web pages, etc.), electronic documents created by word processing applications, or the like, a mode for executing a function of the electronic device (e.g., an application) and displaying content including sub-content, and the like.

As shown in diagram 401 of FIG. 4, the electronic device may display a web page 410 on the screen. The web page 410 may include one or more link objects 411 and 412. Link objects 411 and 412 are referred to as objects including link addresses. Link objects 411 and 412 may be configured to include a content item 412 such as text, images, videos, and the like, and a menu item 411. For example, the link objects 411 and 412 may be configured in hypertext structure on the web page 410.

The electronic device may receive an input signal (e.g., a touch signal) selecting one of the link objects 411 and 412 displayed on the screen. The electronic device may receive information about a web page linked with the selected link object and display the web page on the screen.

As shown in diagram 402 of FIG. 4, when the electronic device receives a web page 430 larger than the screen size, the electronic device may not display part 430-1 of the web page 430 on the screen immediately.

In order to display part 430-1 of the web page 430 on the screen, the electronic device may receive a preset input signal. An example of the preset input signal is a signal 420 for moving a screen in one or more direction (e.g., top, bottom, left and right). Another example of the preset input signal is a signal created by one or more of a touch input, a motion input, a voice input, a mouse wheel input, and a key pad input.

When the electronic device receives an input signal for moving a screen, the electronic device may move the web page 430 in one or more directions. For example, a user may touch the screen of the electronic device with the finger 425 and then move in one or more direction.

According to an embodiment of the present disclosure, the electronic device may display a scrollbar (not shown) for moving a web page on the screen. The scrollbar may include a scroller (not shown) indicating a relative location of a web page displayed on the screen. The input signal may be a signal for controlling a scroller.

The electronic device may determine a movement speed or movement distance of a screen based on the input signal. A web page may be moved based on the movement speed or movement distance determined by an input signal. For example, as shown in diagram 403 of FIG. 4, the electronic device receives an input signal for moving a web page 430, moves the web page 430, and changes a current screen displaying information to the moved web page 430. When moving the screen, the electronic device may also display additional information 440 on the web page 430. For example, when the user inputs a signal for scrolling the screen in the bottom of the display, the electronic device moves the web page 430 so that the information in the top of the web page can be displayed on the bottom side and the additional information 440 can also be displayed when the screen is scrolled.

The additional information 440 may include one or more of content related to information displayed on a screen, set content related to the electronic device, content related to other electronic devices (e.g., accessory devices) connected to the electronic device, content obtained from external electronic devices (e.g., sever), and the like. Examples of the additional information 440 are content (e.g., images, titles, news titles, etc.) included in information displayed on a screen, content obtained from a server, content stored in the electronic device, content related to accessory devices connected to the electronic device, and the like.

When the electronic device moves the web page 430 on the screen, the electronic device may determine whether it satisfies a condition for displaying additional information 440. This condition is to determine whether the electronic device moves the web page 430 on the screen or whether the electronic device moves the web page 430 on the screen and displays the web page 430 along with the additional information 440.

The electronic device may provide an item (e.g., on/off menu) for setting a displaying operation of additional information 440 or may set an input signal corresponding to a function for displaying additional information 440. The electronic device may also set a threshold for a movement speed or movement distance of a screen. For example, when the electronic device detects a flicking gesture on the screen, exceeding a threshold, the electronic device may display additional information 440 that was preset to correspond to the detected flicking gesture.

The electronic device may display additional information 440, discerned from information (e.g., content) included in the web page 430. The electronic device may change the additional information 440 in one or more of color, effect, form, size and location, discerned from the information included in the web page, and display the additional information 440 on the screen. For example, the electronic device may translucently display the additional information 440 on the screen.

The electronic device may display the additional information 440 in such a way that it is combined with/inserted in the web page 430. The electronic device may also display the additional information 440 in such a way that the additional information 440 is overlaid on the web page 430.

The electronic device may set a location of additional information 440 to be displayed on the screen and may display one or more items of the additional information 440. Examples of the location where additional information 440 is displayed may be a fixed location such as the center of the screen, any location corresponding to an empty area on the web page.

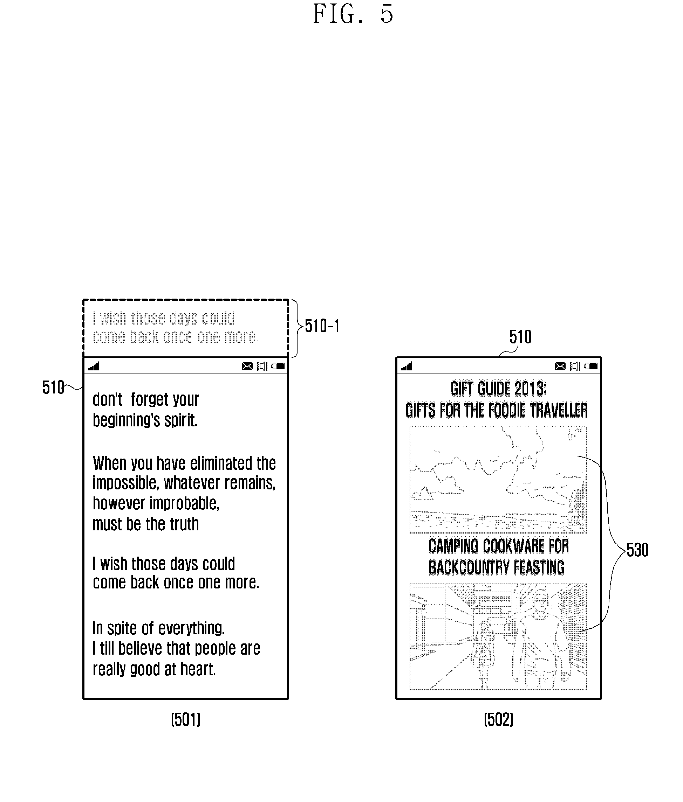

FIG. 5 is a second example of screens displaying information according to an embodiment of the present disclosure.

As shown in diagram 501 of FIG. 5, the electronic device may display a web page 510 on the screen. The electronic device may receive an input signal for moving a screen. An example of the input signal is a signal corresponding to a touch gesture moving in one or more directions on the screen.

The electronic device determines whether an input signal for moving a screen satisfies a condition for displaying additional information. When the electronic device ascertains that an input signal for moving a screen satisfies a condition for displaying additional information, the electronic device may display the additional information 530 as shown in diagram 502 of FIG. 5. Examples of the condition for displaying additional information are a movement speed, a movement distance, a user's preset gesture, a preset voice signal, a preset motion signal, an information settings, etc.

The electronic device may move the web page 510 at a movement speed less than or equal to a threshold, called a first speed, or a movement speed greater than a threshold, called a second speed, according to input signals. For example, when the electronic device detects a touch gesture moving in one or more directions on the screen, the electronic device compares the movement speed with a threshold. When the electronic device ascertains that the movement speed exceeds a threshold, the electronic device concludes that the touch gesture is a flick gesture. When the electronic device ascertains that the movement speed is less than or equal to the threshold, the electronic device concludes that the touch gesture is a drag gesture. When the electronic device ascertains that the touch gesture is a drag gesture, the electronic device moves the web page at a first speed. When the electronic device ascertains that the touch gesture is a flick gesture, it moves the web page at a second speed.

Referring to diagram 501 of FIG. 5, when the electronic device moves the web page 510 at a first speed according to an input signal, part of information included in the web page 510 displayed on the screen may be displayed. While the web page 510 is moved at the first speed, information 510-1 in the top of the web page 510 may not be displayed on the screen as shown in diagram 501 of FIG. 5.

Referring to diagram 502 of FIG. 5, when the electronic device moves the web page 510 at a second speed according to an input signal, part of information included in the web page 510 displayed on the screen may be displayed. While the web page 510 is moved at the second speed, the user may not see information in the web page 510 because the web page 510 is moving. When the electronic device detects a condition (e.g., a flick gesture) where the user cannot detect information displayed on the screen, the electronic device may display one or more items of additional information 530 on the web page 510 that is moving.

When the electronic device ascertains that the movement distance of a web page exceeds a threshold, the electronic device may display additional information 530.

When the electronic device ascertains that a function for displaying additional information 530 is enabled (turned on), the electronic device displays the additional information 530 while the electronic device switches information on the screen according to an input signal. When the electronic device ascertains that a function for displaying additional information 530 is disenabled (turned off), the electronic device switches information on the screen according to an input signal and displays it.

The electronic device may set operation conditions for displaying additional information 530. For example, if a touch gesture moving in one or more directions is a single input as an operation condition, the electronic device does not display additional information 530. If a touch gesture moving in one or more directions is multi-inputs as an operation condition, the electronic device displays additional information 530.

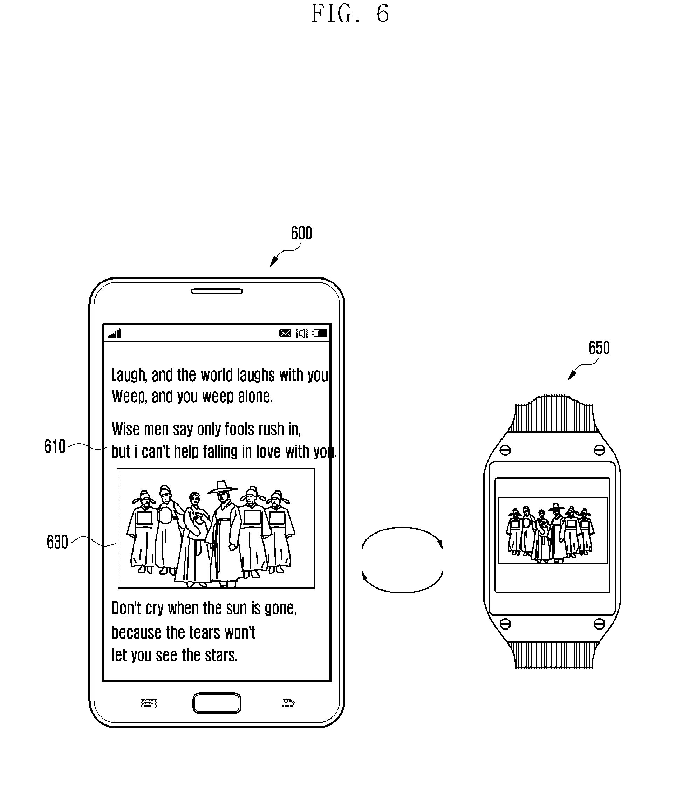

FIG. 6 is a third example of screens displaying information according to an embodiment of the present disclosure.

Referring to FIG. 6, the electronic device 600 (e.g., electronic device 101 shown in FIG. 1) may display a web page 610 along with additional information 630 on the screen while it moves the web page 610.

The electronic device 600 may obtain additional information 630 to be displayed on the screen from an accessory device 650. For example, the electronic device 600 may receive an input signal for moving a web page 610 displayed on the screen. The electronic device 600 determines whether the input signal satisfies a condition for displaying additional information 630. When the electronic device 600 ascertains that the input signal satisfies a condition for displaying additional information 630, the electronic device 600 controls the accessory device 650 and obtains additional information 630 to be displayed on the screen from the accessory device 650. Examples of the additional information 630 are content set by the user and information related to content displayed on the screen.

The electronic device 600 may obtain additional information 630 to be displayed on the screen from a web server related to the web page 610. For example, the electronic device 600 may obtain advertisement content, coupons, purchase content, etc. from web servers. The accessory device 650 may display additional information to be displayed on the screen of the electronic device 600 on a display functionally connected to the accessory device 650.

The electronic device 600 may select additional information 630 to be displayed on the screen from information included in a web page 610 displayed on the screen, and may display the selected additional information 630 on the screen. For example, the electronic device 600 may analyze the configuration of the web page displayed on the screen, and may select part of the visual elements (e.g.., a title, a video, an image, a header, etc.), as additional information 630. The electronic device 600 may display the web page 610 along with the selected additional information 630 while the electronic device 600 moves the web page 610.

The electronic device 600 may obtain additional information 630 from its memory. For example, the electronic device 600 may select content stored in its memory as additional information to be displayed while it moves a web page. When the electronic device 600 ascertains that an input signal satisfies a condition for displaying additional information, it may display the content stored in its memory on the screen while it moves the web page 610.

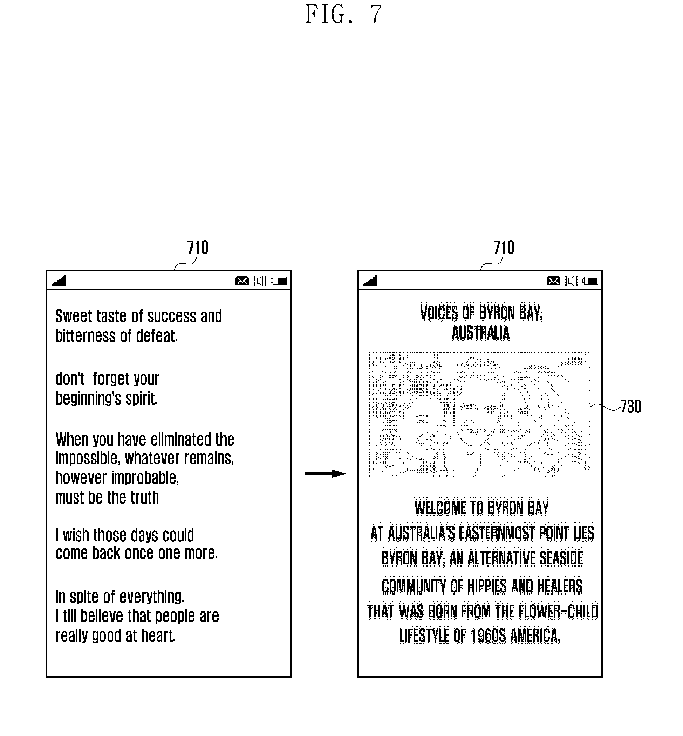

FIG. 7 is a fourth example of screens displaying information according to an embodiment of the present disclosure.

Referring to FIG. 7, the electronic device may display information included in a web page 710, shown in diagram 701, as well as additional information 730, discerned from each other, in terms of one or more of color, effect, form, size and location.

The electronic device may translucently display additional information 730 on the screen, as shown in diagram 702. The electronic device may configure a layer, combine additional information 730 with the layer, and translucently display the additional information 730 on the layer on the screen.

The electronic device may set a location or a mode where additional information 730 is displayed on the screen. For example, if a web page 710 is designed with three areas, additional information 730 may be select to differ from each other in the areas. Additional information 730 may be: advertisement content in a first area, news title in a second area, and an image in a third area. In addition, the electronic device may display the content, set as additional information in corresponding areas, in such a way that: advertisement content is translucently displayed, a news title is enlarged in text-size or highlighted, and an image is enlarged in size.

The electronic device may display additional information 730 according to a speed or a distance of a user's input moving a screen. For example, when the electronic device ascertains that the web page 710 is moved at a first speed, the electronic device may clearly display additional information 730. When the electronic device ascertains that the web page 710 is moved at a second speed, the electronic device may translucently display additional information 730. The electronic device may display the additional information 730 combined with (e.g., to be inserted into/overlaid) on the web page 710.

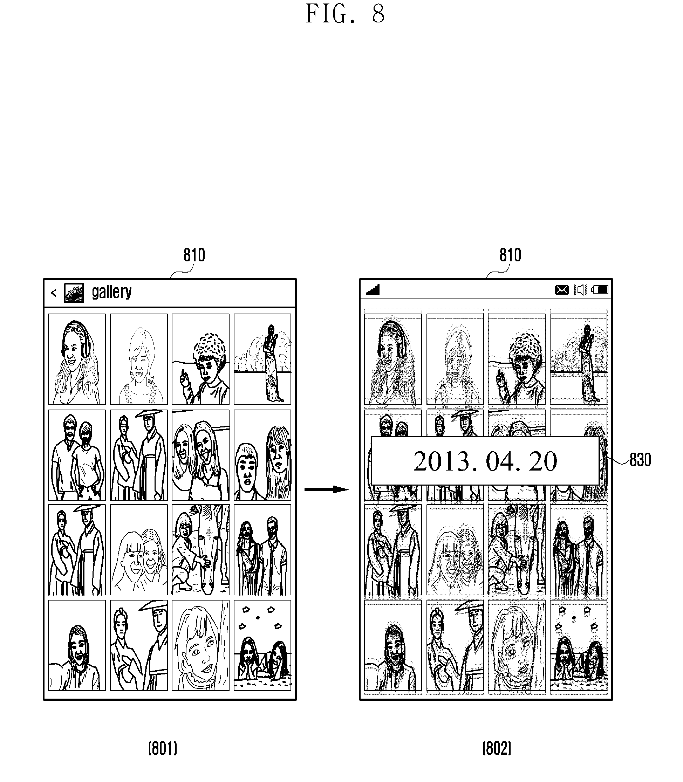

FIG. 8 is a fifth example of screens displaying information according to an embodiment of the present disclosure.

Referring to FIG. 8, the electronic device may execute a function (e.g., application) and display a function execution screen 810 including a number of content on the display. For example, as shown in diagram 801 of FIG. 8, the electronic device executes an album function and displays part of pictures as content on the screen. In that case, the electronic device may not display the other part of the pictures except for part of the pictures displayed on the screen.

The electronic device may receive a user's input signal (e.g., a touch gesture) for moving a screen. When the electronic device ascertains that the input signal satisfies a condition for displaying additional information, the electronic device moves a screen so that another part of the pictures as content can be displayed on the screen and displays additional information 830 while the electronic device moves the screen, as shown in diagram 802 of FIG. 8. For example, the additional information 830 may be picture taken date, and the like. The additional information 830 may be set according to a user's setting or a setting of the electronic device. The user can detect information related to the pictures through the additional information displayed while the screen is moving.

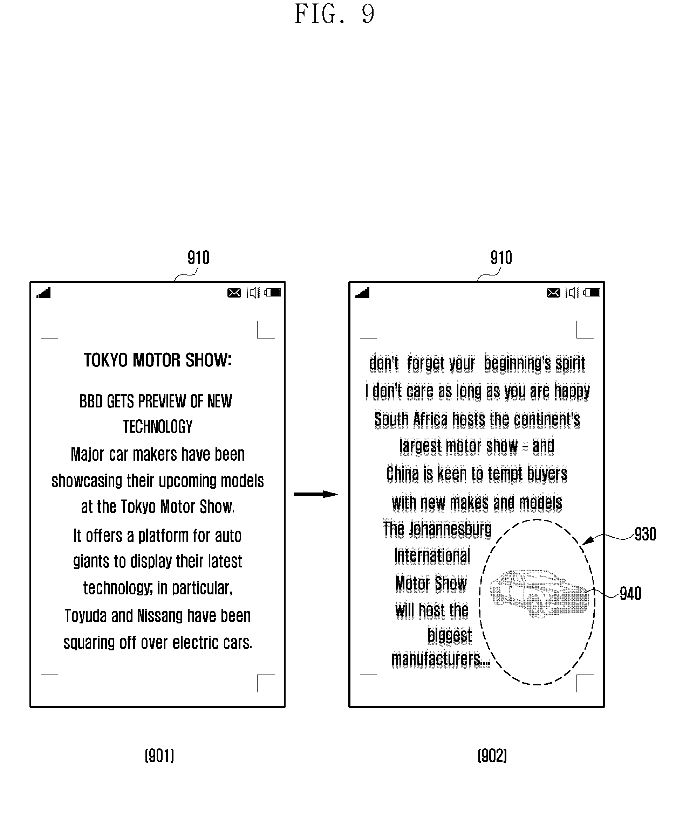

FIG. 9 is a sixth example of screens displaying information according to an embodiment of the present disclosure.

Referring to FIG. 9, the electronic device may display a web page 910 on the screen, as shown in diagram 901. The electronic device receives a user's input signal for moving a screen, e.g., a signal corresponding to a touch gesture moving in one or more directions on a screen.

The electronic device may set a location where additional information 930 will be displayed on the screen and display one or more items of the additional information 930 thereon. Examples of the location where additional information 930 is displayed may be a fixed location such as the center of the screen, any location corresponding to an empty area on the web page. For example, as shown in diagram 902 of FIG. 9, the electronic device may set a display location of additional information 930 to an empty area 940 where information is not displayed while the web page is moving.

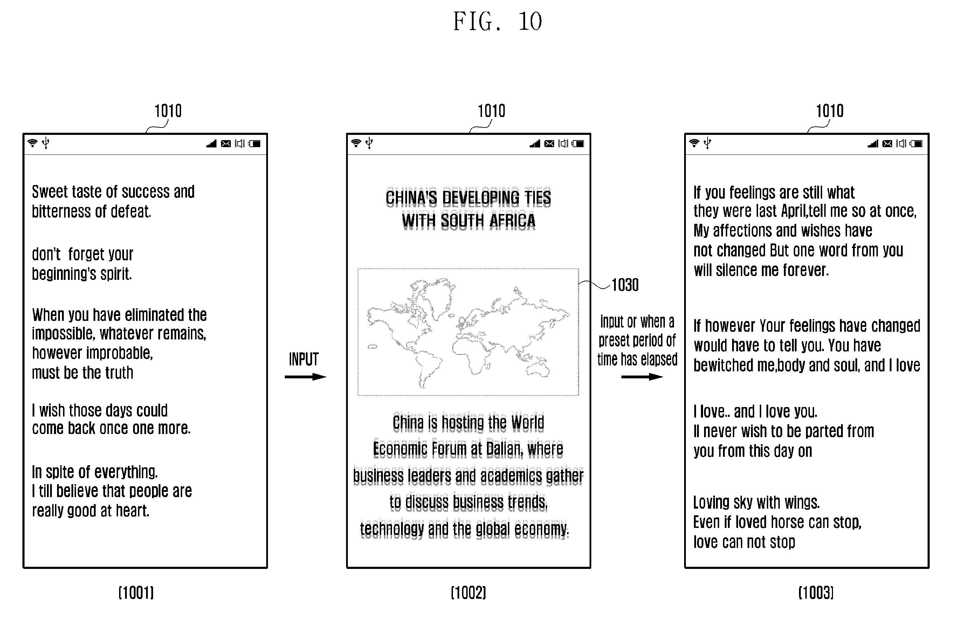

FIG. 10 shows screens releasing the display of information according to an embodiment of the present disclosure.

Referring to FIG. 10, the electronic device may release the display of additional information displayed on the screen. The electronic device may display a web page 1010 on the screen as shown in diagram 1001 of FIG. 10.

The electronic device receives a user's input signal for moving a screen, e.g., a signal corresponding to a touch gesture moving in one or more directions on a screen.

When the electronic device ascertains that the received input signal satisfies a condition for displaying additional information, the electronic device moves the web page 1010 in one direction, changes the currently displayed information in display by the movement of the web page 1010, and displays the additional information 1030 on the screen as shown in diagram 1002 of FIG. 10.

The electronic device may receive an input signal for a condition for releasing the display of additional information. Examples of the condition for releasing the display of additional information are a case where a preset input signal is detected, a case where a preset period of time has elapsed, a case where a screen has been moved, etc.

When the electronic device receives an input signal corresponding to a condition for releasing the display of additional information, the electronic device releases the display of additional information and displays the web page 1010 where part of information was moved by a user's screen movement on the screen as shown in diagram 1003 of FIG. 10.

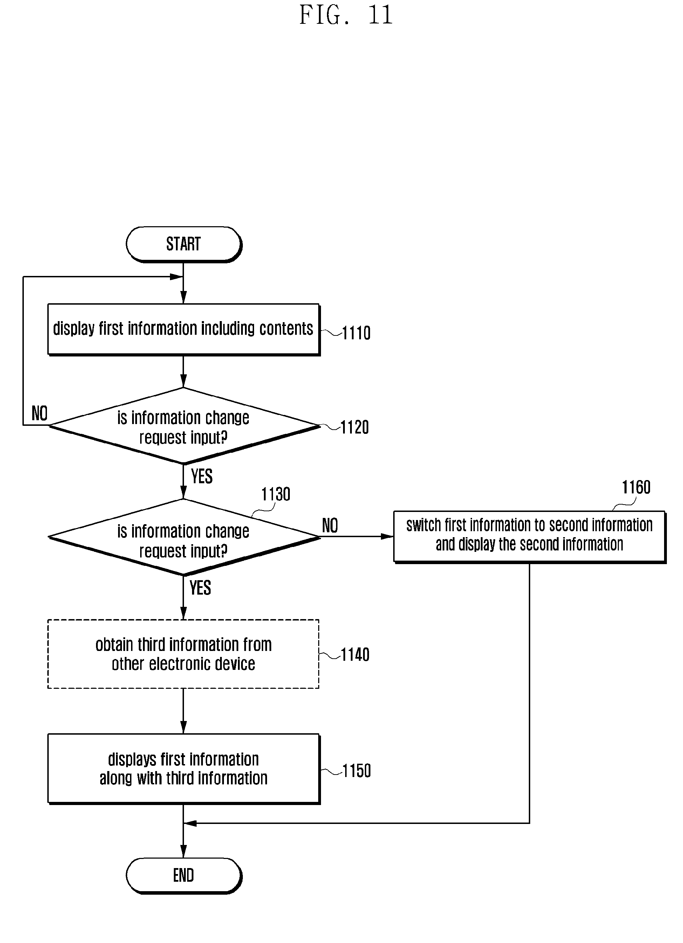

FIG. 11 is a flow chart that describes a method for displaying information according to an embodiment of the present disclosure.

Referring to FIG. 11, the electronic device displays first information including part of content in operation 1110. For example, the electronic device may display a web page or function executing information including one or more content.

The electronic device receives an input signal for requesting information change in operation 1120. An example of the input signal is an input (e.g., a flicking gesture) for moving a screen in a direction. The electronic device determines whether the input signal satisfies a condition for displaying third information in operation 1130. Examples of the condition for displaying third information are a speed, a distance, a user's preset gesture, a preset voice signal, a preset motion signal, and the like. The condition for displaying third information may be set according to a user's settings or a manufacturer's settings.

The electronic device obtains the third information (e.g., additional information) from other electronic devices, e.g., web servers, accessory devices connected to the electronic device, and the like in operation 1140. In certain circumstances, operation 1140 may be omitted according to types of set additional information. For example, if additional information is set to content stored in the electronic device while a screen is moving or part of content displayed on the screen, operation 1150 is performed after operation 1130, and operation 1140 is omitted.

After ascertaining that the input signal satisfies a condition for displaying third information at operation 1130, the electronic device displays the first information along with the third information while it moves the screen in operation 1150. The third information may be one of part of content displayed on the screen, information stored in the electronic device, information obtained from other electronic devices (e.g., servers, accessory devices, etc.) related to the electronic device.

When the electronic device ascertains that the input signal doesn't satisfy a condition for displaying third information at operation 1130, the electronic device moves a screen according to the input signal, switches the first information displayed on the screen to second information, and displays the second information in operation 1160.

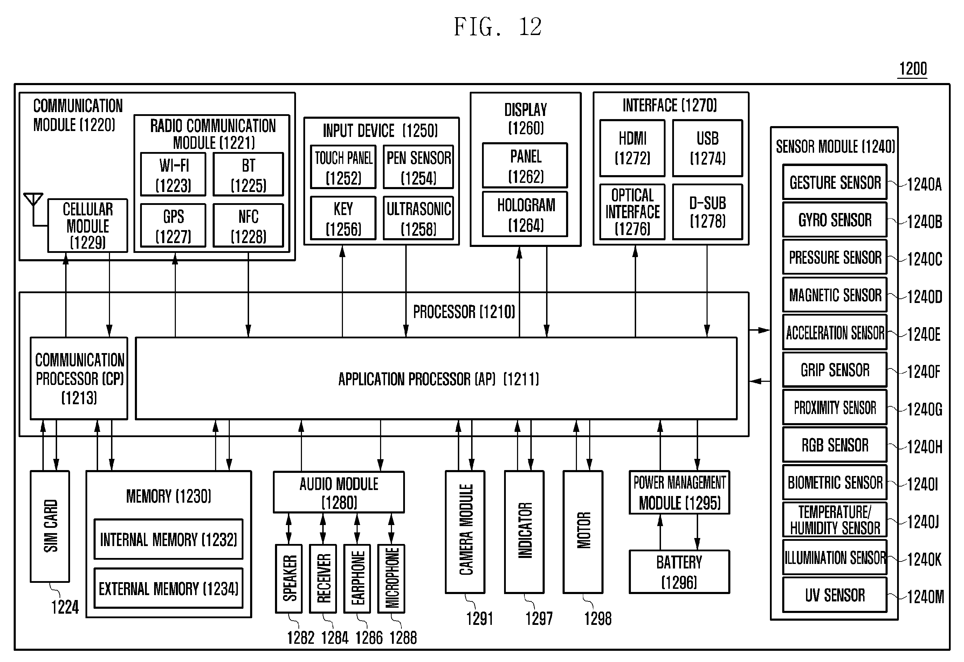

FIG. 12 is a block diagram illustrating a configuration of the electronic device according to an embodiment of the present disclosure.

Referring to FIG. 12, the electronic device 1200 may include an processor 1210, a communication module 1220, a Subscriber Identity Module (SIM) card 1224, a memory 1230, a sensor module 1240, an input device 1250, a display 1260, an interface 1270, an audio module 1280, a camera module 1291, a power management module 1295, a battery 1296, an indicator 1297, and a motor 1298.

The processor 1210 may include an Application Processor (AP) 1211 and a Communication Processor (CP) 1213, and may operate an Operating System (OS) and/or application programs to control a plurality of hardware and/or software components connected to the AP 1210 and perform data-processing and operations on multimedia data. For example, the AP 1210 may be implemented in the form of System on Chip (SoC). According to an embodiment, the AP 1210 may include a Graphic Processing Unit (GPU) (not shown).

The communication module 1220 (e.g. communication interface 160) may perform data communication with other electronic devices (e.g. electronic device 104 and server 106) through a network. According to an embodiment, the communication module 1220 may include a cellular module 1221, a Wi-Fi module 1223, a BT module 1225, a GPS module 1227, an NFC module 1228, and a Radio Frequency (RF) module 1229.

The cellular module 1221 is responsible for voice and video communication, text messaging, and Internet access services through a communication network (e.g. LTE, LTE-A, CDMA, WCDMA, UMTS, WiBro, and GSM networks). The cellular module 1221 may perform identification and authentication of electronic devices in the communication network using the SIM card 1224. The cellular module 1221 may perform at least one of the functions of the AP 1210. For example, the cellular module 1221 may perform at least a part of the multimedia control function.

The cellular module 1221 may be implemented in the form of SOC. Although the cellular module 1221, the memory 1230, and the power management module 1295 are depicted as independent components separated from the AP 1210, the present disclosure is not limited thereto but may be embodied in a way that the AP includes at least one of the components (e.g. cellular module 1221).

Each of the AP 1210 and the cellular module 1221 may load a command or data received from at least one of the components on a non-volatile or volatile memory and process the command or data. The AP 1210 or the cellular module 1221 may store the data received from other components or generated by at least one of other components in the non-volatile memory.

Each of the Wi-Fi module 1223, the BT module 1225, the GPS module 1227, and the NFC module 1228 may include a processor for processing the data it transmits/receives. Although the cellular module 1221, the Wi-Fi module 1223, the BT module 1225, the GPS module 1227, and the NFC module 1228 are depicted as independent blocks, at least two of them (e.g. communication processor corresponding to the cellular module 1221 and Wi-Fi processor corresponding to the Wi-Fi module 1223) may be integrated in the form of SoC.

The RF module 1229 is responsible for data communication, e.g. transmitting/receiving RF signals. Although not depicted, the RF module 1229 may include a transceiver, a Power Amp Module (PAM), a frequency filter, and a Low Noise Amplifier (LNA). The RF module 1229 also may include the elements for transmitting/receiving electric wave in free space, e.g. conductor or conductive wire. Although FIG. 12 is directed to the case where the Wi-Fi module 1223, the BT module 1225, the GPS module 1227, and the NFC module 1228 are sharing the RF module 1229, the present disclosure is not limited thereto but may be embodied in a way that at least one of the Wi-Fi module 1223, the BT module 1225, the GPS module 1227, and the NFC module 1228 transmits/receives RF signals an independent RF module.

The SIM card 1224 may be designed so as to be inserted into a slot formed at a predetermined position of the electronic device. The SIM card 1224 may store unique identity information (e.g., Integrated Circuit Card Identifier (ICCID)) or subscriber information (e.g., International Mobile Subscriber Identity (IMSI)).

The memory 1230 (e.g. memory 130) may include at least one of the internal memory 1232 and an external memory 1234. The internal memory 1232 may include at least one of a volatile memory (e.g. Dynamic Random Access Memory (DRAM), Static RAM (SRAM), Synchronous Dynamic RAM (SDRAM) or a non-volatile memory (e.g. One Time Programmable Read Only Memory (OTPROM), Programmable ROM (PROM), Erasable and Programmable ROM (EPROM), Electrically Erasable and Programmable ROM (EEPROM), mask ROM, flash ROM, NAND flash memory, and NOR flash memory).

The internal memory 1232 may be a Solid State Drive (SSD). The external memory 1234 may be a flash drive such as Compact Flash (CF), Secure Digital (SD), micro-SD, Mini-SD, extreme Digital (xD), and Memory Stick. The external memory 1234 may be functionally connected to the electronic device 1201 through various interfaces. The electronic device 1200 may include a storage device (or storage medium) such as hard drive.

The sensor module 1240 may measure physical quantity or check the operation status of the electronic device 1200 and convert the measured or checked information to an electric signal. The sensor module 1240 may include at least one of gesture sensor 1240A, Gyro sensor 1240B, atmospheric pressure sensor 1240C, magnetic sensor 1240D, acceleration sensor 1240E, grip sensor 1240F, proximity sensor 1240G, color sensor 1240H (e.g. Red, Green, Blue (RGB) sensor), bio sensor 1240I, temperature/humidity sensor 1240J, illuminance sensor 1240K, and Ultra Violet (UV) sensor 1240M. Additionally or alternatively, the sensor module 1240 may include E-nose sensor (not shown), Electromyography (EMG) sensor (not shown), Electroencephalogram (EEG) sensor (not shown), Electrocardiogram (ECG) sensor (not shown), Infrared (IR) sensor (not shown), iris sensor (not shown), and fingerprint sensor (not shown). The sensor module 1240 may further include a control circuit for controlling at least one of the sensors included therein.

The input device 1250 may include a touch panel 1252, a (digital) pen sensor 1254, keys 1256, and an ultrasonic input device 1258. The touch panel 1252 may be one of capacitive, resistive, infrared, microwave type touch panel. The touch panel 1252 may include a control circuit. In the case of the capacitive type touch panel, it is possible to detect physical contact or approximation. The touch panel 1252 may further include a tactile layer. In this case, the touch panel 1252 may provide the user with haptic reaction.

The (digital) pen sensor 1254 may be implemented with a sheet with the same or similar way as touch input of the user or a separate recognition sheet. The keys 1256 may include physical buttons, optical key, and keypad. The ultrasonic input device 1258 is a device capable of checking data by detecting sound wave through a microphone 1288 and may be implemented for wireless recognition. According to an embodiment, the electronic device 1201 may receive the user input made by means of an external device (e.g. computer or server) connected through the communication module 1220.

The display 1260 (e.g. display module 150) may include a panel 1262, a hologram device 1264, and a projector (not shown). The panel 1262 may be a Liquid Crystal Display (LCD) panel or an Active Matrix Organic Light Emitting Diodes (AMOLED) panel. The panel 1262 may be implemented so as to be flexible, transparent, and/or wearable. The panel 1262 may be implemented as a module integrated with the touch panel 1252. The hologram device 1264 may present 3-dimentional image in the air using interference of light. The projector 1266 may project an image to a screen. The screen may be placed inside or outside the electronic device. According to an embodiment, the display 1260 may include a control circuit for controlling the panel 1262, the hologram device 1264, and the projector.

The interface 1270 may include a High-Definition Multimedia Interface (HDMI) 1272, a USB 1274, an optical interface 1276, and a D0subminiature (D-sub) 1278. The interface 1270 may include the communication interface 160 as shown in FIG. 1. Additionally or alternatively, the interface 1270 may include a Mobile High-definition Link (MHL) interface, a SD/MMC card interface, and infrared Data Association (irDA) standard interface.

The audio module 1280 may convert sound to electric signal and vice versa. At least a part of the audio module 1280 may be included in the input/output interface 140 as shown in FIG. 1. The audio module 1280 may process the audio information input or output through the speaker 1282, the receiver 1284, the earphone 1286, and the microphone 1288.

The camera module 1291 is a device capable of taking still and motion pictures and, may include at least one image sensor (e.g. front and rear sensors), a lens (not shown), and Image Signal Processor (ISP) (not shown), and a flash (e.g. LED or xenon lamp) (not shown).

The power management module 1295 may manage the power of the electronic device 1201. Although not shown, the power management module 1295 may include a Power Management Integrated Circuit (PMIC), a charger Integrated Circuit (IC), a battery, and a battery or fuel gauge.

The PMIC may be integrated into an integrated circuit or SoC semiconductor. The charging may be classified into wireless charging and wired charge. The charger IC may charge the battery and protect the charger against overvoltage or overcurrent. According to an embodiment, the charger IC may include at least one of wired charger and wireless charger ICs. Examples of the wireless charging technology includes resonance wireless charging and electromagnetic wave wireless charging, and there is a need of extra circuit for wireless charging such as coil loop, resonance circuit, and diode.

The battery gauge may measure the residual power of the battery 1296, charging voltage, current, and temperature. The battery 1296 may store or generate power and supply the stored or generated power to the electronic device 1200. The battery 1296 may include a rechargeable battery or a solar battery.

The indicator 1297 may display operation status of the electronic device 1201 or a part of the electronic device, booting status, messaging status, and charging status. The motor 1298 may converts the electronic signal to mechanical vibration. Although not shown, the electronic device 1200 may include a processing unit (e.g. GPU) for supporting mobile TV. The processing unit for supporting the mobile TV may be able to processing the media data abiding by the broadcast standards such Digital Multimedia Broadcasting (DMB), Digital Video Broadcasting (DVB), and media flow.

As described above, the text display method and apparatus of an electronic device of the present disclosure is advantageous in terms of reducing a number of page scrolls by discerning the paragraphs included in a text document and folding the paragraphs to present parts of the respective paragraphs.

Also, the text display method and apparatus of an electronic device of the present disclosure is advantageous in terms of improving the legibility of the text in such a way of enlarging, when a folded paragraph is stretched, the font size of the paragraph or highlighting the paragraph.

The above enumerated components of the electronic device of the present disclosure may be implemented into one or more parts, and the names of the corresponding components may be changed depending on the kind of the electronic device. The electronic device of the present disclosure may include at least one of the aforementioned components with omission or addition of some components. The components of the electronic device of the present disclosure may be combined selectively into an entity to perform the functions of the components equally as before the combination.

The term "module" according to the embodiments of the disclosure, means, but is not limited to, a unit of one of software, hardware, and firmware or any combination thereof. The term "module" may be used interchangeably with the terms "unit," "logic," "logical block," "component," or "circuit." The term "module" may denote a smallest unit of component or a part thereof. The term "module" may be the smallest unit of performing at least one function or a part thereof. A module may be implemented mechanically or electronically. For example, a module may include at least one of Application-Specific Integrated Circuit (ASIC) chip, Field-Programmable Gate Arrays (FPGAs), and Programmable-Logic Device known or to be developed for certain operations.

According to various embodiments of the present disclosure, the devices (e.g. modules or their functions) or methods may be implemented by computer program instructions stored in a computer-readable storage medium. In the case that the instructions are executed by at least one processor (e.g. processor 120), the at least one processor may execute the functions corresponding to the instructions. The computer-readable storage medium may be the memory 130. At least a part of the programing module may be implemented (e.g. executed) by the processor 120. At least part of the programing module may include modules, programs, routines, sets of instructions, and processes for executing the at least one function.

The computer-readable storage medium includes magnetic media such as a floppy disk and a magnetic tape, optical media including a Compact Disc (CD) ROM and a Digital Video Disc (DVD) ROM, a magneto-optical media such as a floptical disk, and the hardware device designed for storing and executing program commands such as ROM, RAM, and flash memory. The programs commands include the language code executable by computers using the interpreter as well as the machine language codes created by a compiler. The aforementioned hardware device can be implemented with one or more software modules for executing the operations of the various embodiments of the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for displaying information in an electronic device comprising:
displaying first information including at least part of content on a display region;
switching the first information to second information including the at least part of the content in response to an input related to the content, and displaying the second information on the display region; and
displaying third information related to at least one of the at least part of the displayed content or at least part of preset content on the display region, based on the display of the second information.

2. The method of claim 1, further comprising:
changing the third information in one of color, form, size, and location; and
displaying the changed third information on the display.

3. The method of claim 1, wherein the third information comprises one of:
information including at least part of the content;
information that is related to the content;
information set to the electronic device;
information set to another electronic device connected to the electronic device; and
information that is related to the content and provided by the other electronic device.

4. The method of claim 1, further comprising:
displaying the third information in at least one of an area set by the electronic device, or an area set by a user.

5. The method of claim 1, wherein the content comprises at least one of web pages, electronic documents, or content including sub-content.

6. The method of claim 1, further comprising:
determining whether the input signal satisfies a condition for displaying the third information; and
displaying the third information when the input signal satisfies the condition for displaying the third information, wherein the condition is determined based on the input.

7. The method of claim 1, further comprising:
releasing the display of the third information based on one of a case where an operation corresponding to the input has been performed, a case where another input related to the content is made, and a case where a preset period of time has elapsed.

8. An electronic device comprising:
a display configured to display at least part of content; and
a processor configured to control the display:
to display first information including the at least part of the content on the display region;
to switch the first information to second information including the at least part of the content in response to an input related to the content;
to display the first information on the display region; and
to display third information related to at least one of at least part of the displayed content or at least part of preset content on the display region, based on the display of the second information.

9. The electronic device of claim 8, wherein the third information is displayed on the display when the input is moved from a first location including the first information to a second location including the second information, and the processor turns the display of the third information on/off according to a user's settings.

10. The electronic device of claim 8, wherein the input is an input motion for moving a screen on the display; and the processor displays the third information when an input motion preset as a condition for displaying the third information is detected, or a movement distance or a movement speed of the input motion satisfies a preset condition.

11. The electronic device of claim 10, wherein the processor determines a movement direction or the movement speed of the input motion and displays the second information at a location set by the determined direction and speed.

12. The electronic device of claim 10, wherein the processer determines an area where the second information is not displayed on the display, and displays the third information on the area, or displays the second information and the third information overlaying with each other.

13. The electronic device of claim 8, further comprising:
a communication unit configured to communicate with other electronic devices,
wherein the processor controls the communication unit to receive data related to the content or data related to the other electronic devices and controls the display to display the received data as the third information.

14. The electronic device of claim 8, wherein the processor releases the display of the third information when a preset period of time for displaying the third information has elapsed, or wherein the processor releases the display of the third information when a screen has been moved according to the input for moving the screen.

15. The electronic device of claim 13, wherein the processor controls the communication unit to receive data related to a location of the electronic device, time, and a user's information.
